# EUROPEAN PATENT SPECIFICATION

(11) **EP 0 428 977 B1**
(45) Date of publication and mention of the grant of the patent: **12.04.1995**
(21) Application number: 90121620.0
(22) Date of filing: 12.11.1990
(51) Int. Cl.: C04B 35/52, C04B 41/87

(54) **Process for producing carbonaceous material**
Verfahren zur Herstellung eines Kohlenstoffmaterials
Procédé de fabrication d'un matériau en carbone

(30) Priority: 15.11.1989 JP 294956/89
(43) Date of publication of application: 29.05.1991
(73) Proprietor: NIPPON OIL CO., LTD., Tokyo (JP)
(72) Inventor: Sohda,Yoshio, Tokyo (JP); Kude,Yukinori, Yokohama-shi Kanagawa-ken (JP); Kohno,Takefumi, Yokohama-shi Kanagawa-ken (JP); Makino,Hiroshi, Tokyo (JP)
(74) Representative: Kraus, Walter, Dr.

(56) References cited:
- EP-A- 0 121 797
- EP-A- 0 336 648
- DE-A- 3 426 911
- US-A- 4 425 407

## Description

### BACKGROUND OF THE INVENTION

### [Field of the invention]

The present invention relates to a process for producing a carbonaceous material. In particular, the present invention relates to a process for producing a carbonaceous material having an excellent oxidation resistance.

### [Prior Art]

A carbon/carbon composite capable of maintaining its high strength and high modulus even at a temperature as high as 1,000°C or above in an inert gas and having a low coefficient of thermal expansion is expected to be used as a material for the parts of aircrafts and space crafts, brakes and furnace materials. However, this material has such a poor oxidation resistance that oxidative consumption thereof begins at around 500°C in air. To overcome this defect, an attempt has been made to form a ceramic coating on the surface of the carbon/carbon composite in order to improve its oxidation resistance. However, in fact, the essential function of the coating cannot be fully exhibited, since the coating is peeled off or cracked because of a difference in the coefficient of thermal expansion between the carbon/carbon composite used as the substrate and the ceramic.

### SUMMARY OF THE INVENTION

After investigations made for the purpose of providing a process for producing a carbonaceous material having an excellent oxidation resistance by solving the above-described problems, the inventors have completed the present invention.

The present invention relates to a process for producing a carbonaceous material characterized by heating a carbon/carbon composite, bringing it into contact with an element or a compound of said element capable of forming a heat-resistance carbide on the surface thereof to convert the surface of the carbon/carbon composite into carbide ceramics or both of said surface and part of the inside thereof, and forming a coating film comprising a ceramic or both of a ceramic and carbon on the convert surface by vapor phase decomposition.

### DETAILED DESCRIPTION OF THE PREFERRED EMBODIMENTS

The present invention will now be described in detail.

The carbon/carbon composite used as the base in the present invention comprises carbon fibers and carbonaceous matrix, etc. The volume fraction of the carbon fibers is usually 10 to 70 %, preferably 20 to 60 %.

The carbon fibers constituting the carbon/carbon composite include various ones such as pitch, polyacrylonitrile and rayon carbon fibers, among which the pitch based carbon fiber is preferred, because it can readily enhance the oxidation resistance.

The carbon fiber is used usually in the form of a bundle of 500 to 25,000 continuous fibers. Further carbon fibers in the form of a laminate of unidirection, two-dimensional textile or a laminate thereof, three-dimensional textile, or two-dimensional or three-dimensional moldings of carbon fibers in the form of mat or felt, among which the three-dimensional textile is particularly preferred.

The carbonaceous matrix includes those prepared by carbonizing a carbonaceous pitch, those prepared by carbonizing a carbonizable resin such as a phenolic resin or furan resin and those prepared by chemical vapor deposition (CVD), among which those prepared by carbonizing the carbonaceous pitch are particularly preferred.

The carbonaceous pitch ordinary used includes coal and petroleum pitches each having a softening point of 100 to 400°C, preferably 150 to 350°C. The carbonaceous pitch may be an optically isotropic or anisotropic pitch or a mixture thereof, and particularly preferred is an optically anisotropic pitch having an optically anisotropic phase content of usually 60 to 100 % by volume, most desirably 80 to 100 % by volume.

The process for producing the carbon/carbon composites used as the base in the present invention is not particularly limited and any known process can be employed.

This material can be produced by, for example, impregnating a textile or a molding of the carbon fiber with the carbonaceous pitch, phenolic resin or furan resin and carbonizing it under atmospheric or elevated pressure or under a press. The impregnation is conducted by melting the carbonaceous pitch or the like through heating in vacuum.

The carbonization under atmospheric pressure can be conducted by heating to 400 to 3,000°C in an atmosphere of an inert gas such as argon, nitrogen or helium. The carbonization under elevated pressure can be conducted by heating to 400 to 3,000°C under an isostatic pressure of usually 50 to 10,000 kg/cm², preferably 200 to 2,000 kg/cm² with an inert gas. The carbonization under a press can be conducted by heating to 400 to 3,000°C under uniaxial pressure of 10 to 500 kg/cm² with a hot press or the like.

After the completion of the carbonization, the product can be preferably carbonized or graphitized under atmospheric pressure. The carbonization or graphitization can be conducted by heating to 400 to 3,000°C in an inert atmosphere.

In the present invention, the surface of the heated carbon/carbon composite is brought into contact with an element or a compound of said element capable of forming a heat-resistant carbide thereon to convert the surface of the carbon/carbon composite into carbide ceramics or both of said surface and the inside thereof by the chemical reaction of carbon of the carbon/carbon composite with said element or its compound.

The carbides include SiC, ZrC, TiC, HfC, B₄C, NbC and WC, among which SiC, ZrC, TiC and HfC are particularly preferred. The elements capable of forming a heat-resistant carbide include Si, Zr, Ti, Hf, B, Nb and W, while the compounds of these elements include halides and hydrides thereof. For example, Si, SiCl₄ or SiH₄ is usable for forming SiC; Zr or ZrCl₄ is usable for forming ZrC; Ti or TiCl₄ is usable for forming TiC; and Hf or HfCl₄ is usable for forming HfC. The element or its compound capable of forming a heat-resistant carbide is used usually in gaseous form to be brought into contact with the carbon/carbon composite for reaction.

The carbide forming reaction is preferably conducted in the presence of hydrogen. The amount of hydrogen used may be determined without any limitation depending on the reaction temperature, amount of the feed gas, amount of the fiber, structure of the furnace, etc. For example, it is not larger than 5 parts by volume, preferably 0.01 to 5 parts by volume, per unit volume of the element or its compound capable of forming the carbide.

The carbide forming reaction is preferably conducted under atmospheric or reduced pressure. The pressure is usually 0.1 to 760 mmHg, preferably 10 to 760 mmHg and more preferably 50 to 760 mmHg.

The reaction atmosphere may be diluted with N₂, Ar, He, Ne, Kr, Xe, Rn or other inert gases.

The temperature of heating the carbon/carbon composite is usually 800 to 1,700°C, preferably 1,000 to 1,500°C. When the temperature is lower than 800°C, no carbide coating having a sufficient thickness can be obtained and, on the contrary, when it exceeds 1,700°C, no homogeneous, dense carbide coating can be obtained.

The method of heating the carbon/carbon composite is not particularly limited. For example, a method wherein the carbon/carbon composite is heated with an induced current, a method wherein this material is externally heated or a method wherein an electric current is directly applied to the carbon/carbon composite to heat the latter can be employed.

The carbide forming reaction time can be determined without any limitation. It is usually about 1 min. to about 10 hrs.

The thickness of the carbide coating which is determined depending on the use without any limitation is usually 0.1 to 500 »m, preferably 0.5 to 200 »m. When the thickness of the coating film is less than 0.1 »m, the adhesion between the carbon/carbon composite and the coating film comprising a ceramic or both of a ceramic and carbon is insufficient to cause the peeling or cracking of the coating film.

The weight gain of the material after the carbide coating formation is usually not more than 15 %, preferably riot more than 10 % and more preferably not more than 5 %. When the thickness of the carbide coating exceeds 1 »m, the strength of the carbon/carbon composite might be reduced by the formation of the carbide coating. However, a sufficient strength of this material can be kept by using a carbon fiber having less reactivity, such as a high-modulus pitch carbon fiber, as the carbon fiber which is the main factor of controlling the strength and also by using less or no graphitizable matrix such as a thermosetting resin.

In the present invention, a coating film comprising a ceramic or both of a ceramic and carbon is formed on the surface of the carbide by vapor phase decomposition. This is usually called CVD and includes thermal CVD, plasma CVD and optical CVD.

The ceramics include carbides, nitrides, borides and oxides such as SiC, ZrC, TiC, HfC, B₄C, NbC, WC, TiB₂, BN and Si₃N₄, among which SiC, ZrC, TiC and HfC are particularly preferred. These ceramics can be deposited together with carbon.

The CVD gases to be used for obtaining the carbon include hydrocarbons, particularly those having 1 to 6 carbon atoms, such as methane, natural gases, propane and benzene.

The CVD gases to be used for obtaining the ceramics include halides, hydrides and organometallic compounds of elements such as Si, Sr, Ti, Hf, B, Nb and W and mixtures of them with the above-described hydrocarbon gas, hydrogen or inert gas. For example, SiCl₄, CH₃SiCl₃, (CH₃)₂SiCl₂ or SiH₄ is usable for forming SiC; ZrCl₄ is usable for forming ZrC; TiCl₄ is usable for forming TiC; and HfCl₄ is usable for forming HfC.

The thickness of the coating film is suitably determined depending on the use thereof. It is usually 1 to 2,000 »m, preferably 5 to 1,000 »m. When the thickness is less than 1 »m, the oxidation resistance thereof is insufficient.

In the present invention, after the surface or both of the surface and part of the inside of the carbon/carbon composite are converted into carbide ceramics, it may be further heat-treated. Thus the carbide can be stabilized.

The heat treatment is conducted at a temperature of usually 1,000 to 3,000°C, preferably 1,200 to 3,000°C, in an inert gas or under reduced pressure. It is particularly desirable that the heat treatment be conducted at a temperature equal to or higher than the carbonization temperature. The heat treatment time ranges 1 min. to 10 hrs., while the heating method is not particularly limited.

The heat treatment is conducted in an inert gas or under reduced pressure. The inert gases usable herein include N₂, Ar, He, Kr, Xe and Rn. The reduced pressure ranges from 10⁻³ to less than 760 mmHg, preferably 0.1 to 500 mmHg.

The effect of the present invention resides in that a carbonaceous material free from the cracking or peeling of the coating film and having an excellent oxidation resistance can be produced.

### PREFERRED EMBODIMENTS OF THE PRESENT INVENTION

The following Examples will further illustrate the present invention, which by no means limit the invention.

### Example 1

A carbon/carbon composite comprising an orthogonal three-dimensional textile prepared from 2,000 pitch carbon fibers having a diameter of 10 »m (in Z-axis direction) and 4,000 same fibers (in X-axis and Y-axis directions) as the reinforcing fibers and a petroleum pitch as the matrix material was heated to 1,400°C in a reaction vessel and kept at this temperature for 60 min. under atmospheric pressure while introducing a gaseous mixture of SiCl₄ and H₂ (H₂/SiCl₄ = 0.25) thereinto. Then SiC was deposited on the surface thereof by using a gaseous mixture of CH₃SiCl₃ and H₂ (H₂/CH₃SiCl₃ = 10) as the starting gas by conducting thermal CVD at 1,350°C under a pressure of 667 Pa (5 Torr) for 5 hrs. to form a coating film.

The product was observed with a scanning electron microscope to find that neither cracks nor peeling was recognized on the surface of the carbon/carbon composite, at the interface between the carbon/carbon composite and the carbide, at the interface between the carbide and tile ceramic coating or on the surface of the ceramic coating.

The oxidation resistance of the obtained carbonaceous material was examined by heating it at 600°C in air for 2 hrs. and then determining the weight change thereof. The weight loss was 9.8 %.

### Comparative Example 1

SiC was deposited on the surface of the same carbon/carbon composite as that of Example 1 by conducting thermal CVD by using a gaseous mixture of CH₃SiCl₃ and H₂ (H₂/CH₃SiCl₃ =10) as the starting gas at 1,350°C to form a coating film.

The product was observed with a scanning electron microscope to find that SiC was deposited on the surface of the carbon/carbon composite. However, cracks and peeling were recognized at the interface between the carbon/carbon composite and the carbide.

### Comparative Example 2

The same carbon/carbon composite as that of Example 1 was heated to 1,400°C in a reaction vessel and kept at this temperature for 60 min. while introducing a gaseous mixture of SiCl₄ and H₂ (H₂/SiCl₄ = 0.25) thereinto under atmospheric pressure.

The oxidation resistance of the product was examined in the same manner as that of Example 1 to find that the weight loss was 21.4 %.

### Example 2

The same carbon/carbon composite as that of Example 1 was healed to 1,300°C in a reaction vessel and kept at this temperature for 2 hrs. while introducing a gaseous mixture of SiCl₄ and H₂ (H₂/SiCl₄ = 0.25) thereinto under atmospheric pressure. Then SiC was deposited on the surface thereof by conducting thermal CVD using a gaseous mixture of CH₃SiCl₃ and H₂ (H₂/CH₃SiCl₃ = 10) as the starting gas at 1,350°C under a pressure of 6.67 kPa (50 Torr) for 3 hrs.

The product was observed with a scanning electron microscope to find that neither cracks nor peeling was recognized on the surface of the carbon/carbon composite, at the interface between the carbon/carbon composite and the carbide, at the interface between the carbide and the ceramic coating or on the surface of the ceramic coating.

### Example 3

The same carbon/carbon composite as that of Example 1 was heated to 1,300°C in a reaction vessel and kept at this temperature for 2 hrs. while introducing a gaseous mixture of SiCl₄ and H₂ (H₂/SiCl₄ = 0.25) thereinto under atmospheric pressure. After the heat treatment at 1,700°C in argon gas for 30 min. SiC was deposited on the surface thereof by conducting thermal CVD using a gaseous mixture of CH₃SiCl₃ and H₂ (H₂/CH₃SiCl₃ = 10) as the starting gas at 1,350°C under a pressure of 6.67 kPa (50 Torr) for 3 hrs. to form another coating film.

The product was observed with a scanning electron microscope to find that neither cracks nor peeling was recognized on the surface of the carbon/carbon composite, at the interface between the carbon/carbon composite and the carbide, at the interface between the carbide and the ceramic coating or on the surface of the ceramic coating.

The oxidation resistance of the product was examined in the same manner as that of Example 1 to fined that the weight loss was 9.1 %.

### Example 4

The same carbon/carbon composite as that of Example 1 was heated to 1,300°C in a reaction vessel and kept at this temperature for 2 hrs. while introducing a gaseous mixture of SiCl₄ and H₂ (H₂/SiCl₄ = 0.25) thereinto under atmospheric pressure. Then it was subjected to thermal CVD by feeding 40 cm³/min. (under normal conditions) of C₃H₈ as the starting gas onto its surface at 1,150°C under a pressure of 6.67 kPa (50 Torr). Then the pressure was altered to 13.3 kPa (100 Torr) and the starting gas was replaced with a gaseous mixture of C₃H₈ (40 cm³/min.), SiCl₄ (170 cm³/min.) and H₂ (700 cm³/min.) (under normal conditions) to deposit SiC and carbon on the surface thereof, thereby forming a coating film.

The product was observed with a scanning electron microscope to find that neither cracks not peeling was observed on the surface of the carbon/carbon composite or at the interface between the carbon/carbon composite and the coating film.

## Claims

1. A process for producing a carbon/carbon composite having a ceramic coating or a ceramic and carbon coating characterized by the steps:
(a) heating a carbon/carbon composite at a temperature of from 800 to 1700°C,
(b) contacting the thus heated composite in the presence of hydrogen with at least one compound selected from the group consisting of halides and hydrides of Si, Zr, Ti, Hf, B, Nb and W in gaseous form, optionally in the presence of an inert gas, to convert the outer surface of the carbon/carbon composite or both said outer surface and part of the inside of the carbon/carbon composite into a carbide ceramic, and
(c) forming a coating film consisting of ceramic or both ceramic and carbon by vapor phase decomposition of at least one compound selected from the group consisting of halides, hydrides and organometallic compounds of Si, Zr, Ti, Hf, B, Nb and W or of a mixture of at least one of said compounds and a gaseous hydrocarbon, optionally in the presence of hydrogen or an inert gas, on said carbide ceramic.

## Patentansprüche

1. Verfahren zur Herstellung eines Kohlenstoff/Kohlenstoffverbundstoffs, der einen Keramiküberzug oder einen Keramik-und-Kohlenstoff-Überzug aufweist, **gekennzeichnet** durch die Stufen:
(a) Erhitzen eines Kohlenstoff/Kohlenstoffverbundstoffs auf eine Temperatur von 800 bis 1700°C,
(b) in Kontakt bringen des so erhitzten Verbundstoffs in Gegenwart von Wasserstoff mit mindestens einer Verbindung, ausgewählt aus der Gruppe bestehend aus Halogeniden und Hydriden von Si, Zr, Ti, Hf, B, Nb und W in gasförmiger Form, gegebenenfalls in Gegenwart eines Inertgases, um die äußere Oberfläche des Kohlenstoff/Kohlenstoffverbundstoffs oder sowohl die äußere Oberfläche als auch einen Teil des Inneren des Kohlenstoff/Kohlenstoffverbundstoffs in eine Carbidkeramik umzuwandeln, und
(c) Bildung eines Überzugsfilms, bestehend aus Keramik oder aus sowohl Keramik als auch Kohlenstoff, durch Gasphasenzersetzung mindestens einer Verbindung, ausgewählt aus der Gruppe bestehend aus Halogeniden, Hydriden und organometallischen Verbindungen von Si, Zr, Ti, Hf, B, Nb und W, oder eines Gemisches mindestens einer der genannten Verbindungen und eines gasförmigen Kohlenwasserstoffs, gegebenenfalls in Gegenwart von Wasserstoff oder eines Inertgases, auf der genannten Carbidkeramik.

## Revendications

1. Procédé de production d'un composite carbone/carbone ayant un revêtement de céramique ou un revêtement de céramique et de carbone caractérisé par les étapes de :
(a) chauffage d'un composite carbone/carbone à une température comprise entre 800 à 1 700°C,
(b) mise en contact du composite ainsi chauffé en présence d'hydrogène avec au moins un composé choisi dans le groupe constitué des halogénures et des hydrures de Si, Zr, Ti, Hf, B, Nb et W sous forme gazeuse, facultativement en présence d'un gaz inerte, pour convertir la surface extérieure du composite carbone/carbone ou à la fois la surface extérieure et la partie intérieure du composite carbone/carbone en une céramique de carbure, et
(c) formation d'un film de revêtement composé de céramique ou à la fois de céramique et de carbone par décomposition en phase vapeur d'au moins un composé choisi dans le groupe composé des halogénures, des hydrures et des composés organométalliques de Si, Zr, Ti, Hf, B, Nb et W ou d'un mélange d'au moins un desdits composés et d'un hydrocarbure gazeux, facultativement en présence d'hydrogène ou d'un gaz inerte, sur ladite céramique de carbure.
